# EUROPÄISCHE PATENTANMELDUNG

(11) **EP 4 821 355 A1**
(43) Veröffentlichungstag der Anmeldung: **14.10.2026**
(21) Anmeldenummer: 26154662.6
(22) Anmeldetag: 28.01.2026
(51) Int. Cl.: A01M 1/20

(54) **VERFAHREN ZUR BEHANDLUNG VON NESTERN WESPEN- ODER HORNISSENARTIGER INSEKTEN SOWIE EINRICHTUNG ZUR DURCHFÜHRUNG DES VERFAHRENS**

(30) Priorität: 12.03.2025 DE 102025109369
(71) Anmelder: Gütlein, Markus, 97631 Bad Königshofen (DE)
(72) Erfinder: Gütlein, Markus, 97631 Bad Königshofen (DE)
(74) Vertreter: Gleim Petri Patent- und Rechtsanwaltspartnerschaft mbB

(57) **Zusammenfassung**

Die vorliegende Erfindung betrifft ein Verfahren zur Behandlung von Nestern wespen- oder hornissenartiger Insekten, insbesondere von Faltenwespen (Vespidae), insbesondere invasiver gebietsfremder Arten, wie z. B. asiatischen Hornissen (Vespa velutina), bei dem mittels einer Einrichtung (100) ein Kältemittel in Form von verflüssigtem CO₂ injektionsartig über mindestens eine Einstichstelle in das Innere eines Nests eingespritzt wird. Dieses Kältemittel führt zu einem Vereisen des Inneren des Nests und zu einem augenblicklichen Abtöten der Nestbewohner.

## Beschreibung

Die vorliegende Erfindung betrifft ein Verfahren zur Behandlung von Nestern wespen- oder hornissenartiger Insekten gemäß dem Oberbegriff des Anspruchs 1 sowie eine Einrichtung zur Durchführung des Verfahrens gemäß Anspruch 11.

### Technologischer Hintergrund

Die vorliegende Erfindung betrifft die Behandlung von Nestern wespen- oder hornissenartiger Insekten einer invasiven gebietsfremden Art. Sogenannte invasive gebietsfremde wespen- oder hornissenartige Insekten sind nicht heimische Insekten, die vom Menschen bzw. durch den internationalen Handel eingeschleppt wurden. Die Verordnung (EU) Nr. 1143/2014 betrifft derartige Spezies. Hierzu zählt unter anderem die Asiatische Hornisse (Vespa velutina). Diese stellt ein besonders ernstzunehmendes Problem für heimische Insektenarten dar. Denn die Asiatische Hornisse braucht zur Brutversorgung andere Insekten. Man stellte fest, dass sie deshalb einen, den Jahreszeiten angepassten, artenreichen Speiseplan hat. Im Frühjahr, wenn viele Schwebfliegen und Wildbienen unterwegs sind, sind diese ihre Hauptnahrung und daher besonders gefährdet. Im Sommer bedient sie sich dann gern an den starken Bienenvölkern, da Bienen dann in großer Zahl vorhanden sind. Aus diesem Grund bedingt diese invasive Art eine sehr ernst zu nehmende Bedrohung des Bestands an heimischen Bienenvölkern.

Nester der Asiatischen Hornisse bestehen aus aneinander geklebter Zellulose bzw. einer kartonartigen Masse, im Grunde also aus Holzfasern und Speichel. Die Asiatische Hornisse baut zunächst, wie auch die Europäischen Hornissen, ein Primärnest. Das kann in Schuppen, aber auch in einer Hecke sein. Dieses Nest ist nur aufgrund seiner Bauweise (unten geschlossen, mit einem seitlichen Flugloch) von Nestern der heimischen Hornisse zu unterscheiden. In den Sommermonaten wird das Primärnest und der Raum dafür zu klein, dann wird vom Volk ein Sekundärnest gebaut und zwar, und das unterscheidet die asiatische von den europäischen Wespenarten und Hornissen, ganz oben frei, meist in Höhen von 10 Metern und darüber, in den Bäumen bzw. Baumkronen hängend. Das Nest besteht im ausgebauten Zustand aus etwa 6 bis 12 waagrecht angeordneten Waben, die auch aus der kartonartigen Masse (aus zerkauten Holzfasern) bestehen. Es ist vollständig von einer Nesthülle aus demselben Material umgeben. Die Nester können eine Höhe von ca. 1 m und einen Durchmesser von ca. 80 cm haben. Das Hornissenvolk kann zum Höhepunkt der Volksentwicklung im Frühherbst auf eine Volksstärke von etwa 1000 bis 2000 Individuen anwachsen. Die Position eines solchen Nests in bis zu zehn Metern Höhe oder sogar höher macht deren Bergung oder Entfernung so schwierig.

### Druckschriftlicher Stand der Technik

Aus https://materiel-pompier.com/de/Produkt/Teleskopauszug-8m/ ist eine 8 Meter Teleskopverlängerung für Insektizid-Pulversprüher bekannt. Die Teleskopverlängerung kann an ein Pulversprühgerät angeschlossen werden, welches mit einem Insektizidpulver gegen Hornissen befüllt werden kann. Das Insektizid dient dazu, die Hornissen in ihrem Nest zu töten. Das Problem dieser Methode besteht darin, dass die mittels des Insektizids getöteten Hornissen von Vögeln gefressen werden, wodurch das Insektizid auf die Vögel übertragen wird und diese erkranken und sterben können. Diese Methode wirkt sich negativ auf den Vogelbestand aus. Zudem gelang das Insektizid in die Nahrungskette.

### Aufgabe der vorliegenden Erfindung

Die Aufgabe der vorliegenden Erfindung besteht darin, ein umweltverträgliches und einfach durchführbares Verfahren zur Behandlung von Nestern wespen- oder hornissenartiger Insekten der invasiven Art sowie eine geeignete Einrichtung hierfür zur Verfügung zu stellen. Ferner besteht die Aufgabe der vorliegenden Erfindung darin, eine geeignete Einrichtung zur Durchführung des Verfahrens zur Verfügung zu stellen.

### Lösung der Aufgabe

Die vorstehende Aufgabe wird durch die Merkmale des Anspruchs 1 gelöst. Zweckmäßige Ausgestaltungen der vorliegenden Erfindung werden in den abhängigen Ansprüchen beansprucht.

Erfindungsgemäß wird in das Innere des Nests über mindestens eine Einstichstelle in der Nestwandung ein Kältemittel injektionsartig eingespritzt. An der Einstichstelle wird die Außenhülle des Nestes bzw. Nesthülle mit einem geeigneten Werkzeug durchstoßen und anschließend die Injektion des Kältemittels im Inneren des Nestes an mindestens einem Injektionspunkt durchgeführt. Dies führt zu einem kältebedingen Abtöten der Insekten durch sofortiges Erfrieren. Da ein Kältemittel kein Gift oder Insektizid ist, kann die nachteilige Wirkung von Giften bzw. Insektiziden auf die Umwelt oder die Nahrungskette wirksam ausgeschlossen werden. Vögel können die in dem Nest befindlichen, abgetöteten Hornissen fressen, ohne zu erkranken oder daran zu sterben. Zudem sind Kältemittel relativ günstig, da sie für unterschiedlichste Anwendungen, z. B. auch in der Nahrungsmittelindustrie wie z. B. zur Nahrungsmittelfrostung, angeboten werden. Das mit dem erfindungsgemäßen Verfahren behandelte Nest kann bei Bedarf nach der Behandlung auch ohne Gefahr entfernt werden.

Gemäß einer vorteilhaften Ausführungsform der Erfindung kann das Kältemittel an mehreren Injektionspunkten, d.h. an mehreren Positionen innerhalb des Nests, injektionsartig, vorzugsweise gleichzeitig, eingespritzt werden. Hierdurch kann der erfindungsgemäße Effekt des Kälteschocks und der Erfrierung der Insekten optimal in das Volumen des Nestes eingebracht werden.

Gemäß einer Ausführungsform der Erfindung können die mehreren Injektionspunkte, d. h. mehreren Positionen innerhalb des Nests, ein Flächen- oder Raummuster definieren. Ein Flächenmuster bedeutet, dass die mehreren Injektionspunkte in einer Ebene bzw. Fläche liegen. Ein Raummuster bedeutet, dass die mehreren Injektionspunkte einen dreidimensionalen Raum festlegen. Hierdurch kann der Kälteeintrag in das Gesamtvolumen des Nestes bzw. der darin befindlichen Zell- bzw. Wabenstrukturen noch zusätzlich optimiert werden.

Gemäß einer vorteilhaften Ausgestaltung der Erfindung kann die jeweilige Einstichstelle in der Nestwandung mit einem Abdeckmittel außenseitig bedeckt werden. Hierdurch kann ein Entkommen von Nestbewohnern an der jeweiligen Einstichstelle verhindert werden. Insbesondere gilt dies dann, wenn die Einstichstelle durch das Einstechen in die Nesthülle beschädigt oder aufgebrochen und hierdurch unbeabsichtigt vergrößert wird. Gleichzeitig kann die Abdeckung auch als optische Markierung und Orientierung dienen, um feststellen zu können, wie weit ein bereits in das Nest eingestochenes Injektionswerkzeug in das Innere des Nestes eintaucht oder eingetaucht ist.

Gemäß einer Ausführungsform der Erfindung erfolgt mittels des eingespritzten Kältemittels ein Schockfrosten des Inneren des Nestes. Das Kältemittel ermöglicht somit ein Schockfrosten bzw. ein schockartiges Vereisen des Nestes. Das Schockfrosten führt unter angemessener Berücksichtigung der Umwelt zu einer sofortigen Tötung der Tiere und erspart somit Schmerzen, Qualen oder Leiden derselben. Die Methode erfüllt somit die Vorgaben des Art. 17 der Verordnung (EU) Nr. 1143/2014 des Europäischen Parlaments und des Rates vom 22. Oktober 2014 über die Prävention und das Management der Einbringung und Ausbreitung invasiver gebietsfremder Arten.

Gemäß einer vorteilhaften Ausführungsform der Erfindung kann als Kältemittel verflüssigtes Kohlenstoffdioxid (CO₂) eingespritzt werden. Verflüssigtes CO₂ verwandelt sich bei einem Entspannen schlagartig in Trockeneis. Hierdurch bildet sich somit schlagartig Trockeneis im Inneren des Nestes, wodurch die Tiere mit sofortiger Wirkung vereist werden können. Verflüssigtes CO₂ ist insofern für diese spezielle Anwendung besonders vorteilhaft, da es beim Injizieren einen Trockeneisnebel ausbildet, der in die einzelnen Nestbereiche bzw. Nesthohlräume vordringen kann. Hierdurch wird eine effektive Volumenerfassung erreicht.

Gemäß einer vorteilhaften Ausgestaltung der Erfindung kann das Kältemittel mit einem Druck von 0,5 bis 5,0 bar eingespritzt werden. Dieser Druck kann mittels einem mit verflüssigtem Kältemittel (z. B. verflüssigtem CO₂) befüllten Druckbehälter angeordneten Druckminderer entsprechend voreingestellt sein oder voreingestellt werden. Für das Injizieren muss von der Bedienperson lediglich nur das Verschlussventil des Druckbehälters geöffnet werden.

Gemäß einer Ausführungsform der Erfindung kann das Kältemittel beim Einspritzen eine Temperatur von ca. - 78°C aufweisen.

Gemäß einer Ausführungsform der Erfindung kann das Nest nach dem Einspritzen des Kältemittels am Bauort des Nestes verbleiben. Dies ist besonders vorteilhaft, da aufwendige Maßnahmen zur Entfernung von Nestern wegen Kontamination mit Insektiziden entfallen. Die Behandlung durch das erfindungsgemäße Verfahren ist daher erheblich kostengünstiger. Zudem können Vögel die abgetöteten Insekten problemlos aus dem am Baum verbliebenen Nest fressen, ohne selbst Schaden zu nehmen. Behandelte Nester verbleiben somit der natürlichen Nahrungskette erhalten.

Die vorliegende Erfindung betrifft ferner eine Einrichtung zur Durchführung des Verfahrens gemäß Anspruch 11. Die Einrichtung umfasst eine Injektionseinheit mit mindestens einer Injektionsröhre, wobei die Injektionsröhre mindestens eine Austrittsöffnung für das Kältemittel aufweist. Die Injektionsröhre wird in das Nest eingestochen und legt die Einstichstelle fest. Die Austrittsöffnung der Injektionsröhre bildet, z. B. an ihrer vorderseitigen Austrittsöffnung, einen Injektionspunkt. Die Einrichtung umfasst weiterhin einen Druckbehälter zur Bevorratung von verflüssigtem Kältemittel vor Ort. Eine vorzugsweise schlauchförmige Zuführungsleitung dient zur Zuführung des verflüssigten Kältemittels von dem Druckbehälter zur Injektionseinheit. Eine Bedienperson bedient den Druckbehälter, eine weitere Bedienperson bedient die Injektionseinheit. Sobald die Injektionsröhre von der einen Bedienperson eingestochen worden ist, öffnet die andere Bedienperson das Hauptventil des Druckbehälters, so dass verflüssigtes, druckreduziertes Kältemittel über die Zuführungsleitung und die Injektionseinheit in das Nestinnere injiziert werden kann.

Gemäß einer vorteilhaften Ausgestaltung der Erfindung kann die Injektionseinheit mehrere gruppiert angeordnete, z. B. parallel zueinander angeordnete, Injektionsröhren aufweisen. Die Injektionsöffnungen können hierbei entlang einer Linie angeordnet sein. Alternativ können sie auch unterschiedliche Flächenmuster oder dreidimensionale Muster festlegen. Die Injektionsröhren können dabei an ein sich in mehrere Anschlüsse verzweigendes Anschlussverzweigungsteil, das mit einem an die Zuführleitung endseitig angeschlossenen Anschlussteil verbunden ist, angeordnet sein.

Gemäß einer Ausführungsform der Erfindung können entlang einer Injektionsröhre auch mehrere Injektionsöffnungen vorgesehen sein.

Gemäß einer Ausführungsform der Erfindung können mehrere Injektionsöffnungen derart an der Injektionseinheit angeordnet sein, dass sie das Volumen eines Nests auch punktuell nachbilden.

Gemäß einer Ausführungsform der Erfindung kann die mindestens eine Austrittsöffnung abgeschrägt sein. Dies erleichtert das Einstechen der Injektionsröhre in die Nesthülle.

Gemäß einer Ausführungsform der Erfindung kann der Druckbehälter einen Druckminderer umfassen. Hierdurch kann der Applikationsdruck eingestellt werden. Ferner kann der Druckbehälter als Steigrohrflasche ausgebildet sein. Dies stellt sicher, dass verflüssigtes Kältemittel im Gegensatz zu gasförmigem Kältemittel, welches sich ebenfalls in dem Druckbehälter befinden kann, injiziert wird.

Gemäß einer Ausführungsform der Erfindung kann die Injektionseinheit mit einer vorzugsweise stangenförmigen, besonders vorzugsweise teleskopierbaren, also mit ineinanderzuschiebenden Teilen ausgestatteten, Handhabe versehenen sein. Hierdurch ist es für die Bedienperson möglich, das Einstechen der Injektionseinheit aus einer gewissen Entfernung zum Nest vorzunehmen. Die Handhabe besteht vorzugsweise aus einem leichten, aber mechanisch stabilen Material, wie z. B. Aluminium, einer Aluminiumlegierung, Kunststoff oder aus einem Verbundwerkstoff, z. B. aus einem faserverstärkten Kunststoff (z. B. einem Kohlenstofffaserverstärkten Kunststoff) oder aus einem Kohlenstofffaserverstärkten Kohlenstoff (CFC).

Gemäß einer vorteilhaften Ausführungsform kann die Injektionseinheit als Drohne ausgebildet sein, die mindestens eine Injektionsröhre aufweist, wobei die Injektionsröhre mindestens eine Austrittsöffnung für das Kältemittel aufweist. Die Steuerung und Navigation kann in vorteilhafter Weise ferngesteuert erfolgen, so dass die Drohne das Nest zielgenau und in der erforderlichen Flughöhe erreichen kann. Der Druckbehälter zur Bevorratung des verflüssigten Kältemittels kann entweder in oder an der Drohne transportiert werden oder er bleibt am Boden und kann mit der Drohne über eine vorzugsweise schlauchförmige Zuführungsleitung zur Zuführung des verflüssigten Kältemittels zur Drohne bzw. zu der Injektionseinheit verbunden sein.

Es kann auch eine Drohne verwendet werden, welche über eine Kamera verfügt, die die Temperatur eines Hornissennestes, welche bei etwa 36 °C liegt, erkennt. Damit wäre möglicherweise eine frühere Erkennung und/oder eine noch zielgenauere Ansteuerung des Nestes möglich.

Gemäß einer Ausführungsform der Erfindung kann sich an der jeweiligen Injektionsröhre eine vorzugsweise zur Austrittsöffnung hin gewölbte, in einem Einstechabschnitt zur vorderseitigen Austrittsöffnung entfernt angeordnete Abdeckung befinden. Diese Abdeckung kann z. B. eine gummiartige Saugglocke eines Ausgussreinigers sein.

### Beschreibung der Erfindung anhand von Ausführungsbeispielen

Zweckmäßige Ausgestaltungen des erfindungsgemäßen Verfahrens sowie einer zur Durchführung des Verfahrens geeigneten Einrichtung werden nachstehend beispielhaft beschrieben. Widerkehrende Merkmale sind der Übersichtlichkeit halber lediglich einmal mit einem Bezugszeichen versehen. Es zeigen:
- Fig. 1: eine Darstellung eines ersten Ausführungsbeispiels einer Einrichtung zur Durchführung des erfindungsgemäßen Verfahrens;
- Fig. 2: eine Darstellung eines zweiten Ausführungsbeispiels einer Einrichtung zur Durchführung des erfindungsgemäßen Verfahrens;
- Fig. 3: eine stark vereinfachte Darstellung eines Nests von Asiatischen Hornissen; sowie
- Fig. 4: ein Beispiel einer an die typische Nestform angepassten Injektionseinheit.

Die vorliegende Erfindung betrifft ein Verfahren zur Behandlung von Nestern wespen- oder hornissenartiger Insekten, insbesondere der Faltenwespen (Vespidae), insbesondere invasiver gebietsfremder Arten, hier vor allem der Asiatischen Hornisse (Vespa velutina), bei dem ein Kältemittel injektionsartig über mindestens eine Einstichstelle in das Innere eines Nests eingespritzt wird. Als Kältemittel eignet sich verflüssigtes Kohlenstoffdioxid (CO₂) besonders gut. Das Einspritzen von verflüssigtem CO₂ in das Innere eines Nests bewirkt ein augenblickliches Vereisen des Inhalts und hierdurch ein augenblickliches Abtöten der Nestbewohner. Man kann diesen Prozess mit einem Schockfrosten des Inneren des Nests vergleichen. Die abgetöteten Nestbewohner sind nicht mit einem Insektizid kontaminiert. Daraus resultiert der Vorteil, dass das Nest im Baum verbleiben kann und Vögel die abgetöteten Nestbewohner fressen können. Das sich im Inneren des Nests bildende Trockeneis verflüchtigt sich durch den Wärmeeintrag aus der Umgebungsluft in relativ kurzer Zeit. Das Verfahren ist somit bezüglich der Nahrungsmittelkette völlig unbedenklich.

Das Kältemittel bzw. verflüssigte CO₂ kann mit einem Druck von 0,5 bis 5 bar, vorzugsweise z. B. mit einem Druck von 2 bar, eingespritzt werden. Beim Einspritzen besitzt das Kältemittel bzw. das verflüssigte CO₂ eine Temperatur von ca. -78 °C.

Vorteilhaft ist es, wenn das Kältemittel bzw. verflüssigte CO₂ gleichzeitig an mehreren Injektionspunkten innerhalb des Nests injektionsartig eingespritzt wird. Hierdurch wird eine noch schnellere Vereisung des Volumens des Nests erreicht.

Vorzugsweise können die mehreren Injektionspunkte ein Flächen- oder Raummuster definieren. Ein durch die Injektionspunkte definiertes Raummuster kann sogar der typischen Volumenform eines Nests angepasst sein.

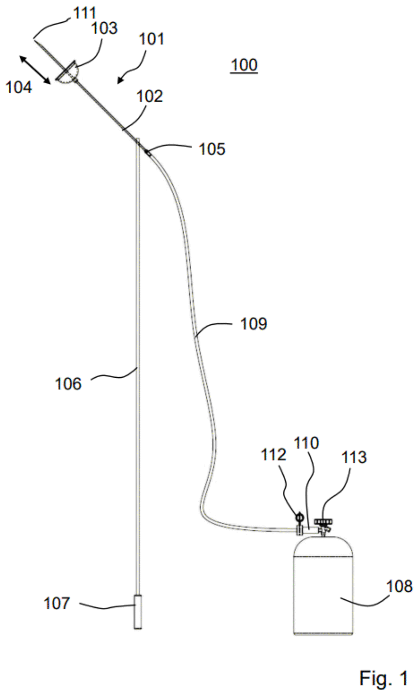

Fig. 1 zeigt eine für die Durchführung des erfindungsgemäßen Verfahrens geeignete Einrichtung 100. Die Einrichtung 100 umfasst eine Injektionseinheit 101 mit einer Injektionsröhre 102 sowie einer vorderseitigen Austrittsöffnung 111. Im Bereich der Austrittsöffnung 111 kann die Injektionsröhre 102 angespitzt oder abgeschrägt sein, um ein leichteres Einstechen der Injektionsröhre 102 in eine Nesthülle zu ermöglichen.

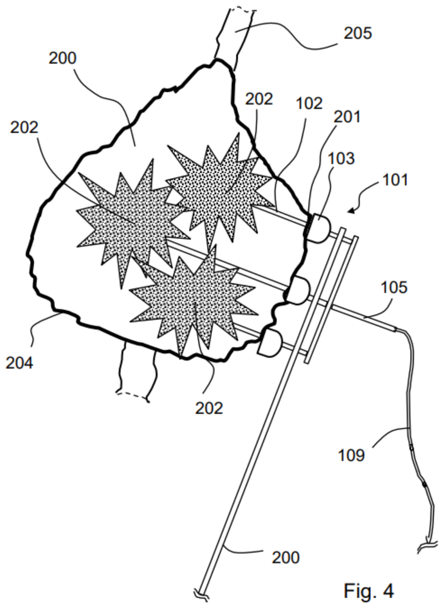

Die Injektionseinheit 101 umfasst des Weiteren eine zur Austrittsöffnung 111 hin gewölbte Abdeckung 103, die sich in einem gewissen Abstand zur Austrittsöffnung 111 an der Injektionsröhre 102 befindet. Dieser Abstand ist in Fig. 1 mit der Bezugsziffer 104 gekennzeichnet und legt den Einstechabschnitt fest. Der Einstechabschnitt 104 definiert somit die Einstichtiefe der Injektionsröhre 102, sobald die Abdeckung 103 an der Außenseite eines Nests 200 (siehe Fig. 4) anliegt.

Die Abdeckung 103 dient dazu, zu verhindern, dass Nestbewohner über die Einstichstelle 201 ins Freie gelangen können. Diese Gefahr liegt insbesondere dann vor, wenn es beim Einstechen in die Nesthülle 204 (siehe Fig. 4) zu einem Aufbrechen im Bereich der Einstichstelle 201 führt.

Die Injektionseinheit 101 ist mit einer Handhabe 106 verbunden, an deren Ende sich ein Handgriff 107 befindet. Die Handhabe 106 ermöglicht es einer Bedienperson, in einem ausreichenden Abstand die Injektionseinheit 101 in ein Nest 200 einzustechen. Darüber hinaus ermöglicht es die Handhabe 106, die Injektionseinheit 101 über eine große Entfernung in ein an einem Baum hängendes Nest 200 einzustechen. Die Handhabe 112 kann vorteilhafterweise teleskopierbar, also durch ineinanderzuschiebenden Teile in der Länge veränderbar, ausgebildet sein.

Die Handhabe 112 kann beispielsweise aus einem leichten Metall, wie z. B. aus Aluminium oder einer Aluminiumlegierung, aus Kunststoff oder aus einem Verbundwerkstoff, z. B. aus einem faserverstärkten Kunststoff (z. B. einem Kohlenstofffaserverstärkten Kunststoff) oder aus einem Kohlenstofffaserverstärkten Kohlenstoff (CFC) bestehen, um eine ausreichende mechanische Stabilität bei geringem Gewicht zu gewährleisten.

Das Kältemittel bzw. verflüssigte CO₂ wird in einem insbesondere portablen Druckbehälter 108 bereitgestellt. Dieser umfasst ein manuell zu öffnendes oder zu schließendes Hauptventil 113 sowie einen Druckminderer 110, mit dem das Kältemittel bzw. verflüssigte CO₂ mit einem bestimmten Druck der Injektionseinheit 101 zugeführt werden kann. Des Weiteren kann an dem Druckbehälter 108 ein Manometer 114 zur Anzeige des Drucks vorgesehen sein.

Der Druckbehälter 108 ist über eine flexible Zuführleitung 109, z. B. einen Druckschlauch, und über ein Anschlussteil 105 mit der Injektionseinheit 101 verbunden.

Gemäß einer zweckmäßigen Ausgestaltung kann die Abdeckung 103 in ihrer Position veränderbar entlang der Injektionsröhre 102 positioniert und fixiert werden. Hierdurch ergibt sich somit ein veränderbarer Einstechabschnitt 104.

Die Bedienung der Einrichtung 100 erfolgt vorzugsweise durch zwei Personen, wobei die eine Person die Injektionseinheit 101 über die Handhabe 106 bedient und die andere Person den Druckbehälter 108 bedient, sobald die Injektionseinheit 101 in das Nest eingestochen worden ist.

Die in Fig. 1 gezeigte Ausführungsform der Einrichtung 100 umfasst eine einzige Injektionseinheit 101 mit einer einzigen Injektionsröhre 102, die über ein Anschlussteil 105 mit der Zuführleitung 109 verbunden ist. Die Injektionsröhre 102 kann zu der Handhabe 106 schwenkbar verbunden sein, wobei der gewünschte Winkel zwischen Injektionsröhre 102 und Handhabe 106 einstellbar und fixierbar sein kann.

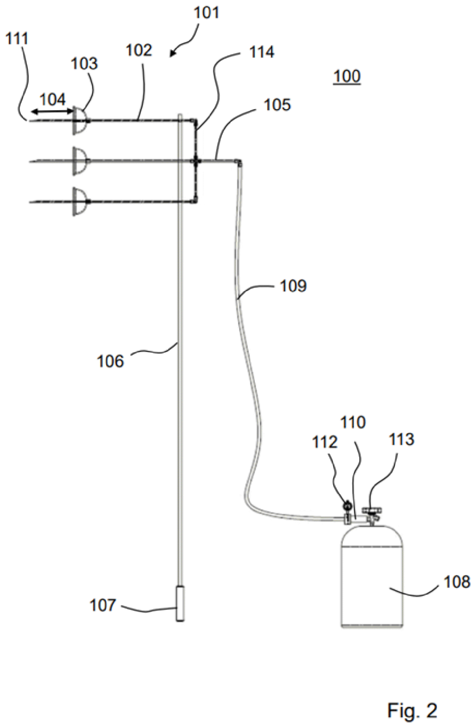

Das zweite Ausführungsbeispiel der Einrichtung 100 in Fig. 2 unterscheidet sich von dem ersten Ausführungsbeispiel dadurch, dass die Injektionseinheit 100 drei parallel zueinander verlaufende Injektionsröhren 102 aufweist. Die Austrittsöffnungen 111 der drei Injektionsröhren 102 liegen auf gleicher Höhe bzw. bilden eine Gerade. Das sich an das Anschlussteil 105 anschließende Anschlussverzweigungsteil 114 sind hierbei so gestaltet, dass das Kältemittel bzw. verflüssigte CO₂ aus der Zuführleitung 109 zu gleichen Teilen in die einzelnen Injektionsröhren 102 aufgeteilt wird. Das Anschlussverzweigungsteil 114 bewirkt eine Aufteilung des anstehenden Drucks des Kältemittels bzw. des verflüssigten CO₂ auf die drei parallel verlaufenden Injektionsröhren 102. Auch bei dieser Ausführungsvariante können die Injektionsröhren 102 zum oberseitigen Bereich der Handhabe 106 schwenkbar verbunden sein, so dass eine bestimmte Neigung der Injektionsröhren 102 eingestellt werden kann. Im Übrigen entspricht diese Ausgestaltung der Ausgestaltung gemäß Fig. 1.

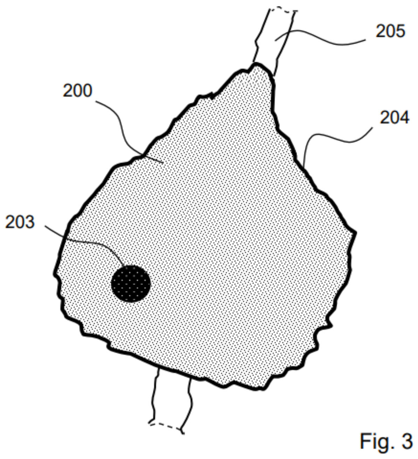

In Fig. 3 ist in vereinfachter Darstellung die typische Form eines Nests der Asiatischen Hornisse dargestellt. Das Nest 200 ist an einem Ast 205 eines Baums angeordnet, besitzt eine tropfenartige Form und kann eine Länge bzw. Höhe von etwa 100 cm erreichen. Es besteht aus aneinander geklebter Zellulose. Die Nesthülle ist mit Bezugsziffer 204 gekennzeichnet. Das Nest 200 ist unten geschlossen und besitzt ein seitliches Flugloch 203.

Gemäß der weiteren, in Fig. 4 gezeigten Ausführungsform ist die Lage der Injektionspunkte 202 der Injektionseinheit 101 so gewählt, dass ein zweidimensionales Muster bzw. Flächenmuster (hier ein Dreieck) gebildet wird, welches der Form des Nests 200 zumindest in der Fläche in etwa angepasst ist. Ebenso könnte auch ein (in Fig. 4 nicht dargestelltes) Volumenmuster bzw. räumliches Muster mit einer entsprechenden dreidimensionalen Anordnung von Injektionspunkten 202 erzeugt werden. Hierdurch wird ein optimaler Eintrag in das Volumen des Nests 200 gewährleistet.

Gemäß einer weiteren, zweckmäßigen Ausgestaltung können entlang einer Injektionsröhre 102 zusätzlich zu der vorderseitigen Austrittsöffnung 111 auch weitere Austrittsöffnungen vorgesehen sein.

### BEZUGSZEICHENLISTE

- 100: Einrichtung
- 101: Injektionseinheit
- 102: Injektionsröhre
- 103: Abdeckung
- 104: Einstechabschnitt
- 105: Anschlussteil
- 106: Handhabe
- 107: Handgriff
- 108: Druckbehälter
- 109: Zuführleitung
- 110: Druckminderer
- 111: Austrittsöffnung
- 112: Manometer
- 113: Hauptventil
- 114: Anschlussverzweigungsteil

- 200: Nest
- 201: Einstichstelle
- 202: Injektionspunkt
- 203: Flugloch
- 204: Nesthülle
- 205: Ast

## Patentansprüche

1. Verfahren zur Behandlung von Nestern wespen- oder hornissenartiger Insekten, insbesondere von Faltenwespen (Vespidae), insbesondere invasiver gebietsfremder Arten, wie z. B. der Asiatischen Hornissen (Vespa velutina), **dadurch gekennzeichnet, dass** ein Kältemittel injektionsartig über mindestens eine Einstichstelle (201) in das Innere des Nests (200) eingespritzt wird.

2. Verfahren nach Anspruch 1, **dadurch gekennzeichnet, dass** das Kältemittel an mehreren Injektionspunkten (202) innerhalb des Nests injektionsartig eingespritzt wird.

3. Verfahren nach Anspruch 2, **dadurch gekennzeichnet, dass** die mehreren Injektionspunkte (202) ein Flächen- oder Raummuster definieren.

4. Verfahren nach Anspruch 3, **dadurch gekennzeichnet, dass** das Raummuster der Volumenform eines Nests angepasst ist.

5. Verfahren nach einem der vorhergehenden Ansprüche, **dadurch gekennzeichnet, dass** die jeweilige Einstichstelle (201) in der Nestwandung mit einem Abdeckmittel außenseitig bedeckt wird.

6. Verfahren nach einem der vorhergehenden Ansprüche, **dadurch gekennzeichnet, dass** mittels des eingespritzten Kältemittels ein Schockfrosten des Inneren des Nestes erfolgt.

7. Verfahren nach einem der vorhergehenden Ansprüche, **dadurch gekennzeichnet, dass** als Kältemittel verflüssigtes Kohlenstoffdioxid (CO₂) eingespritzt wird.

8. Verfahren nach einem der vorhergehenden Ansprüche, **dadurch gekennzeichnet, dass** das Kältemittel mit einem Druck von 0,5 bis 5,0 bar eingespritzt wird.

9. Verfahren nach einem der vorhergehenden Ansprüche, **dadurch gekennzeichnet, dass** das Kältemittel beim Einspritzen eine Temperatur von ca. - 78°C aufweist.

10. Verfahren nach einem der vorhergehenden Ansprüche, **dadurch gekennzeichnet, dass** das Nest nach dem Einspritzen des Kältemittels am Bauort des Nestes verbleibt.

11. Einrichtung (100) zur Durchführung des Verfahrens gemäß einem der vorhergehenden Ansprüche, mit
einer Injektionseinheit (101) mit mindestens einer Injektionsröhre (102), wobei die Injektionsröhre (102) mindestens eine Austrittsöffnung (111) für das Kältemittel aufweist,
einem Druckbehälter (108) zur Bevorratung von verflüssigtem Kältemittel, sowie
einer vorzugsweise schlauchförmigen Zuführungsleitung (109) zur Zuführung von verflüssigtem Kältemittel von dem Druckbehälter (108) zur Injektionseinheit (101).

12. Einrichtung (100) nach Anspruch 11, **dadurch gekennzeichnet, dass** die Injektionseinheit (101) mehrere gruppiert angeordnete Injektionsröhren (102) aufweist.

13. Einrichtung (100) nach Anspruch 12, **dadurch gekennzeichnet, dass** die Austrittsöffnungen der Injektionsröhren (102) das Volumen eines Nests punktuell nachbilden.

14. Einrichtung (100) nach Anspruch 12, **dadurch gekennzeichnet, dass** die mindestens eine Austrittsöffnung (111) abgeschrägt ist.

15. Einrichtung (100) nach den Ansprüchen 11 bis 14, **dadurch gekennzeichnet, dass** der Druckbehälter (108) einen Druckminderer (110) umfasst und/oder als Steigrohrflasche ausgebildet ist.

16. Einrichtung (100) nach den Ansprüchen 11 bis 15, **dadurch gekennzeichnet, dass** der Druckbehälter (108) mit verflüssigtem CO₂ befüllt ist.

17. Einrichtung (100) nach den Ansprüchen 11 bis 16, **dadurch gekennzeichnet, dass** die Injektionseinheit (101) mit einer vorzugsweise stangenförmigen, besonders vorzugsweise teleskopierbaren Handhabe (106) versehenen ist.

18. Einrichtung (100) nach den Ansprüchen 11 bis 17, **dadurch gekennzeichnet, dass** sich an der jeweiligen Injektionsröhre (102) eine vorzugsweise zur Austrittsöffnung (111) hin gewölbte, in einem Einstechabschnitt (104) entfernte Abdeckung (103) befindet.
